# EUROPEAN PATENT APPLICATION

(11) **EP 2 048 817 A1**
(43) Date of publication of application: **15.04.2009**
(21) Application number: 07425642.1
(22) Date of filing: 12.10.2007
(51) Int. Cl.: H04L 12/24, H04L 12/56

(54) **Method and system for channel diversity and hot-stand-by protection in communication networks with distributed decision making intelligence, corresponding network and computer program product**

(71) Applicant: Nokia Siemens Networks S.p.A., 20126 Milano (IT)
(72) Inventor: Aliotta, Mario, 20040 Roncello (IT); Santacesaria, Claudio, 20139 Milano (IT); Finardi, Davide, 24027 Teviglio (IT); Sanità, Gianluca, 20090 Settala (IT)
(74) Representative: Fischer, Michael

(57) **Abstract**

In a packet communication network, a same stream of packets is transmissible between two nodes (M, N) over a transmission path therebetween including one or more intermediate nodes (A1, A2, B1, B2). In a channel diversity or hot stand-by protection scheme, the transmission path is selected out of different transmission paths (A, B) based on a switching decision taken at a decision node. The transmission path is configured for providing a hop-by-hop check message of the continuity of the transmission path itself. The switching decision is thus taken as a result of one of:
- an explicit switching command issued by one intermediate node (A1, A2, B1, B2) in the transmission path, and
- an implicit switching command implied by the loss of the hop-by-hop continuity check message.

## Description

### Field of the invention

The invention relates to communication networks and was devised with specific attention paid to its possible application to communication networks with distributed switching intelligence.

### Description of the related art

Ethernet and IP (Internet Protocol) networks are being increasingly used beyond the boundaries of their conventional fields of application in areas such as e.g. the carrier domain where new requirements on link and path redundancy are to be complied with.

Standardization bodies have recently addressed this issue with several standards, a standard such as e.g. ITU-T G.8031 being a case in point.

This standard describes an end-to-end protection switching mechanism for path protection in a context where different paths may pass through different intermediate nodes. The corresponding protocol assumes wired connections and the underlying concept is a very simple one: continuity check messages keep the active path under control and, in case of failure, a fast switching to the protection path is triggered via messages carried on the protection path.

Other protocols such as IETF RFC 3619 use a similar approach in order to cope with ring topologies: a master node keeps the ring open by defining a primary port (active) and a secondary port (normally blocked). Ring health messages verify the status of the link; in case of failure, which can be detected either as a result of health messages being lost or following explicit link down notification sent by any transit node to the master node, the master node enables its secondary port. This protocol is limited to ring topologies.

### Object and summary of the invention

The inventors have noted that no protocol for path protection is known so far that allows path protection wherein the decision is taken by one node while other nodes are involved in the decision. This may be because these other nodes know better than the actual node which is expected to perform the switching action the reasons for such switching and/or because intermediate nodes need awareness of such switching decision to take consequent actions.

The inventors have noted that all known protocols assume that the decision node can make local decisions and has all information to do that. Moreover, known protocols assume that the decision should be made on the basis of a path failure detection (such as continuity check) and intermediate nodes will not be informed of such a switching decision.

Specifically, the problem needs to be addressed of performing path switching by collecting information from intermediate nodes and informing back the intermediate nodes of the decision taken. One case where this problem emerges is when a point-to-point radio link is used to connect two nodes. A second, back-up radio link can be adopted in order to provide protection against failures of the first link. In such a case, the main link can be interrupted due to a failure and switching to the protection path is effected; however, the link could also be interrupted due to a temporary fading condition impacting on the radio propagation and in the latter case switching shall not be triggered.

The need is therefore felt for improved arrangements where these shortcomings are definitely dispensed with.

The object of the invention is thus to provide a fully satisfactory response to these needs.

According to the present invention, that object is achieved by means of a method having the features set forth in the claims that follow. The invention also relates to a corresponding system (e.g. a communication node), a corresponding network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

An embodiment of the invention thus provides end point switching based on hop by hop information, explicit intermediate node switching command or hop continuity check loss; intermediate nodes can take decisions for (i.e. on behalf of ) the actual switching node. Also, switching decisions taken by the decision node in order to trigger consequent actions (such as switching on a stand-by transceiver) are notified by means of a hop-by -hop notification mechanism.

An embodiment of the invention thus provides a communication system including a node with multiple packet interfaces and path protection support, whereby the node is capable of sending the same information stream to either one of two different interfaces and to select the incoming interface among at least two interfaces; the path selection made by this communication node, acting as a decision making node, is based on an explicit switching command issued by an intermediate node of the path or an implicit switching command implied by the loss of an hop-by-hop continuity check message.

As used herein, the designation "continuity check" message is intended to include other current designations for these messages such as "keep-alive" or "health" messages.

In an embodiment, an intermediate node propagates backward the implicit switching command when it detects the loss of its hop-by-hop continuity towards the next node.

In an embodiment, an explicit notification of switching is issued by either the decision making node or any intermediate node towards other intermediate nodes.

In an embodiment, the explicit notification is issued by decision making node towards some or all intermediate nodes in the protection path which is becoming the active one.

In an embodiment, the explicit notification is issued by the intermediate node that is sending explicit or implicit switching command towards some or all intermediate nodes of protection path which is becoming the active one.

### Brief description of the annexed drawings

The invention will now be described, by way of example only, with reference to the enclosed figures of drawing, wherein:
- Figure 1 is a schematic representation of two switching nodes in a communication network,
- Figure 2 further details a practical implementation of the arrangement of figure 1 in conformity with the arrangement described herein,
- Figure 3 is a schematic representation of another arrangement of two switching nodes in a communication network, and
- Figure 4 is a schematic representation of still another arrangement of nodes in a communication network.

### Detailed description of preferred embodiments of the invention

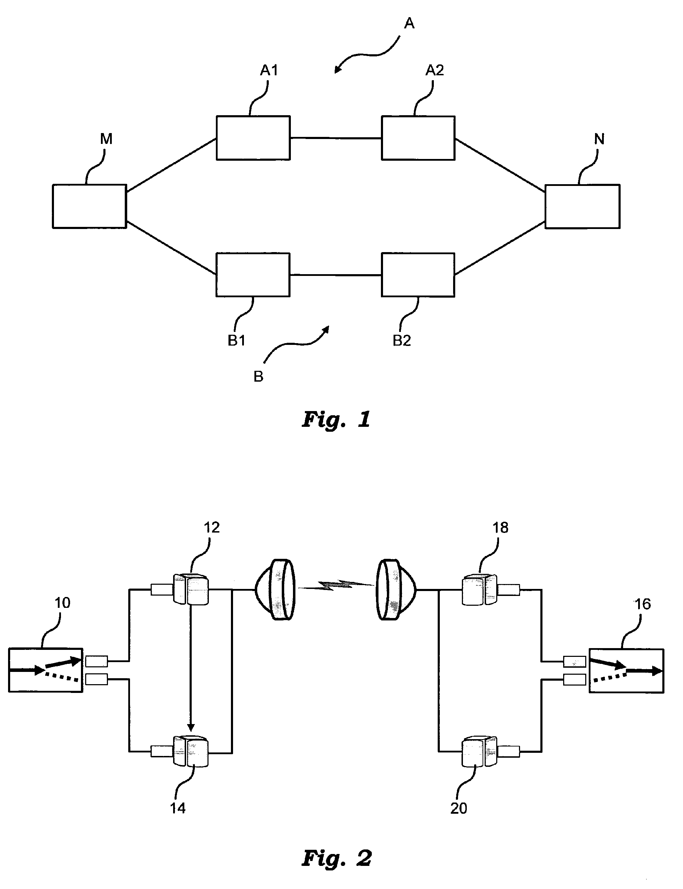

As indicated, Figure 1 is a schematic representation of two switching nodes, M and N, respectively in a communication network.

The nodes M and N communicate through a (main) path A - e.g. via intermediate nodes A1 and A2 - and via a backup path B - e.g. via intermediate nodes B1 and B2, here assumed to be all different from A1 and A2 for the sake of simplicity.

If continuity of path A is broken, M and N will recognize the situation and path B will take over.

The principles and details of such a takeover process are known in the art and do not require to be described in detail herein.

In the exemplary embodiment illustrated in figure 2, the nodes M and N are Ethernet switches or point to point radio link IDUs (Indoor Data Units), that implement baseband processing, while A1, A2, B1 and B2 are point-to-point radio communication appliances ODUs (OutDoor Units or Outdoor Device Units), that implement radio frequency processing and power amplifier); the connections from A1 to A2 and from B1 to B2 are radio links.

As better detailed in the following, the nodes M and N may include radio link end points including:
- on the transmission side, a transmitter or TX chain (Layer 2 or L2 device) 10 having associated TX OutDoor Units or Outdoor Device Units (briefly ODUs) 12 and 14; and
- on the receiver side, a receiver or RX chain (L2 device) 16 having associated RX ODUs 18 and 20.

At least in radio environment where the A and B nodes (i.e. the nodes designated A1, A2, B1, and B2) are radio link end points, these nodes may be involved in the decision to make a switch.

For example, continuity between M and N may be broken due to a failure in node A1 or due to radio channel fading between the nodes A1 and A2. In a radio environment, a failure in node A1 shall trigger a protection switching, whereas this will not generally be the case for fading: in fact the path (channel) through B1 and B2 will be affected by the same fading condition, or even worse, if unbalanced couplers to the same antenna are used for A1 and B1 and for A2 and B2.

In this scenario, the node A1 shall inform the node M that a switching may be needed. At the same time, the node A2 may provide the same information (if necessary) to the node N.

It will be appreciated that the nodes M and N shall not necessarily switch at the same time due to the shared physical medium. In a point-to-point radio environment, the radio channel is shared among different hardware transmitters and receivers of the protection chain.

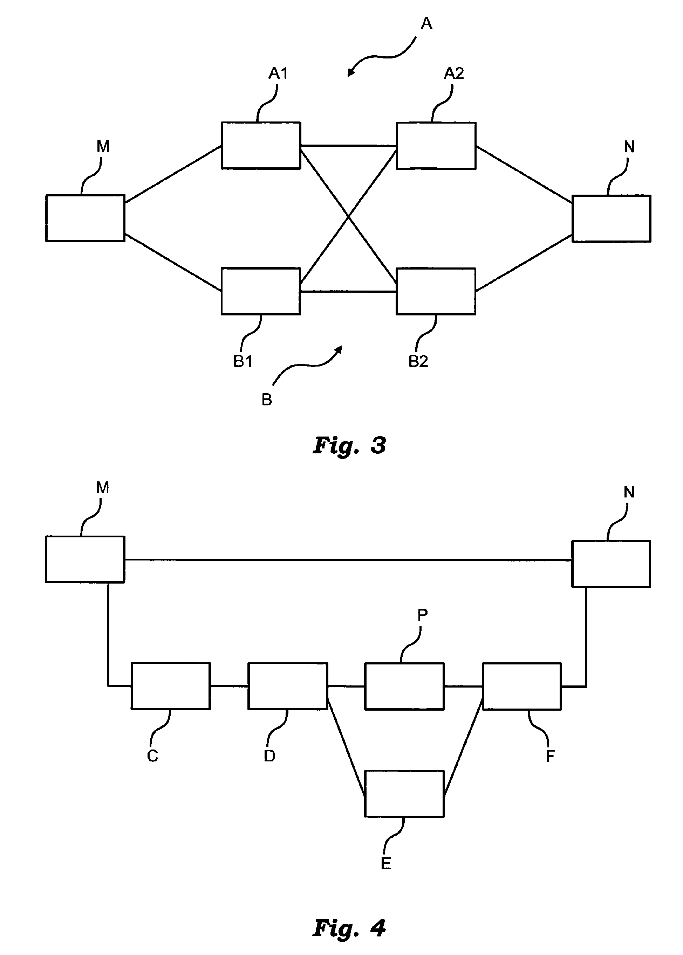

As schematically represented in figure 3, M can thus make a decision between A1 and B1, and N can make an independent decision between A2 and B2 so that one out of A1 and B1 is on line at any time and one out of A2 and B2 is on line at any time.

With reference to this embodiment, one may assume that A1 and A2 are on line.

In that case, A1 sends health messages to the node M. In case A1 self-detects a failure, A1 stops sending health messages and M switches to B1. The node N has detected no failures and keeps on working with A2. Health messages are local and can be very fast (e.g. 10ms).

Switching can take place after 3 missed health messages (e.g. within 50 ms, including the switching time). In one embodiment, A1 can send explicit switching commands to M (faster) when it detects a failure and health messages are still used for covering total A1 failure that prevents proper operation of the self-checking function in the node A1.

If a fading affects a radio channel, communication is interrupted but no switching will generally occur as the node A1 continues to send health messages.

In conventional arrangements, the health messages either are end-to-end messages exchanged between switching nodes or are totally missing, which prevents any decision taken on information available in intermediate nodes.

In the arrangement described herein, a node can be the one taking the decision as to switching being needed and another node can be the one actually executing the switching action.

In an embodiment, when the node M acting as a switching node switches transmission from A1 to B1, also reception is switched to B1.

In a currently less preferred embodiment, transmission and reception decisions can be rendered independent, provided that intermediate nodes are able to produce detailed failure information indicating whether transmission, reception or both are affected by the failure.

In other embodiments, the other nodes can be involved in signalling. For instance, the node A2 can detect a received signal loss due to a failure associated with A1 that A1 was not able to detect by self-checking. In that case, A2 may sent an explicit switching command to M.

At least in a radio environment, the need might arise of informing the intermediate nodes of the switching decision. In the embodiment described, when M takes its decision to switch to B1 for transmission, the node B1 powers "on" its power amplifier which was previously idle. Therefore a message (issued by either of A1 or M depending on the embodiment) shall reach B1 in order to activate the transmission path.

As another embodiment, one may consider the case where A1 cannot directly communicate with B2 but only with A2 (the same limitation also applying to B1 and A2).

In that case, failures associated with A1 will interrupt continuity checks to M as well as to A2 (continuity checks can be performed in different ways according to the physical layer and specific failure type, can be a message or a pure physical layer switch off). The node A2 will consequently interrupt its continuity checks towards N and so that both M and N will switch to B1 and B2, respectively.

The backward propagation of hop-by-hop continuity check messages as described herein can also cope with more complex topologies and multiple switching nodes along same or different paths of a meshed network.

By way of example, figure 4 refers to a meshed network scenario where two "end" nodes M and N may be connected via:
- a direct path MN;
- a first alternative path MCDPFN through nodes CDPF; and
- a second alternative path MCDEFN through nodes CDEF.

The mechanism of back-propagating the keep-alive message for the link as described herein (rather than by sending it end-to-end) makes it possible to converge unambiguously on one of the alternative paths when the active path breaks down.

For instance, if one assumes that the path MCDPFN is active and that the link DPF breaks down for a failure at P.

In conventional arrangements, the nodes M and N would identify the failure as end-point and may decide to use the direct link MN. In no case would they decide to use the alternative link MCDEFN since the end points M and N are not aware of where the failure occurred and cannot control switching at D and F.

As opposed thereto, in the arrangement described herein, the nodes F and D may detect the absence of the keep-alive messages on the link DF and switch over to the link DEF without M and N even becoming aware of this. Decisions may thus be distributed over plural switches and the alternative path may be selected by controlling distributed switches.

In the scenario of figure 4, if the node D breaks down, so that both paths DEF and DPF are compromised, the node C may detect the absence of keep-alive messages and (since the node C has no alternative paths available) stop sending its keep-alive messages to the node M, which may thus take a switching decision.

The exemplary embodiment described in connection with figure 4 makes it further clear that the arrangement disclosed herein is applicable to contexts different from point-to-point radio.

Consequently, without prejudice to the underlying principles of the invention, the details and the embodiments may vary, even appreciably, with reference to what has been described by way of example only, without departing from the scope of the invention as defined by the annexed claims.

## Claims

1. A method of operating a packet communication network, wherein a stream of packets is transmissible between two nodes (M, N) over a transmission path therebetween including at least one intermediate node (A1, A2, B1, B2), said transmission path being selected out of at least two transmission paths (A, B) based on a switching decision taken at a decision node, said transmission path providing a hop-by-hop check message of the continuity of the transmission path, the method wherein said switching decision is taken as a result of one of:
- an explicit switching command issued by said at least one intermediate node (A1, A2, B1, B2) in the transmission path, and
- an implicit switching command implied by the loss of said hop-by-hop continuity check message.

2. The method of claim 1, including the steps of:
- said at least one intermediate node (A1, A2, B1, B2) in the transmission path detecting the loss of said hop-by-hop continuity check message towards the next node in said transmission path and generating said implicit switching command implied by the loss of said hop-by-hop continuity check message, and
- said at least one intermediate node (A1, A2, B1, B2) in the transmission path backward propagating said implicit switching command over said transmission path.

3. The method of either of claims 1 or 2, wherein each intermediate node (A1, A2, B1, B2) in said transmission path is either aware of said switching decision or notified said switching decision by the decision node.

4. The method of any of the previous claims, wherein said switching decision causes a protection path to become said transmission path between said two nodes (M, N), the method including the step of notifying said switching decision to at least part of the intermediate nodes in said protection path which becomes said transmission path between said two nodes (M, N) as a result of said switching decision.

5. The method of claim 4, wherein said switching decision is notified to at least part of the intermediate nodes in said protection path which becomes said transmission path between said two nodes (M, N) as a result of said switching decision by said at least one intermediate node (A1, A2, B1, B2) in the transmission path that issues said explicit or implicit switching command.

6. A communication node for a packet communication network, wherein a stream of packets is transmissible between two nodes (M, N) over a transmission path therebetween including at least one intermediate node (A1, A2, B1, B2), said transmission path being selected out of at least two transmission paths (A, B) based on a switching decision taken at a decision node, said communication node being configured for acting as said decision node in the method of any of claims 1 to 5.

7. A communication node for a packet communication network, wherein a stream of packets is transmissible between two nodes (M, N) over a transmission path therebetween including at least one intermediate node (A1, A2, B1, B2), said transmission path being selected out of at least two transmission paths (A, B) based on a switching decision taken at a decision node, said communication node being configured for acting as said at least one intermediate node (A1, A2, B1, B2) in the method of any of claims 1 to 5.

8. A packet communication network, wherein a stream of packets is transmissible between two nodes (M, N) over a transmission path therebetween including at least one intermediate node (A1, A2, B1, B2), said transmission path being selected out of at least two transmission paths (A, B) based on a switching decision taken at a decision node, said transmission path providing a hop-by-hop check message of the continuity of the transmission path, the network including a set of nodes according to either of claims 6 or 7.

9. A computer program product, loadable in the memory of at least one computer and including software code portions for performing the steps of the method of any of claims 1 to 5.
